# FASCICULE DE BREVET EUROPEEN

(11) **EP 0 580 495 B1**
(45) Date de publication et mention de la délivrance du brevet: **09.04.1997**
(21) Numéro de dépôt: 93401865.6
(22) Date de dépôt: 20.07.1993
(51) Int. Cl.: G02B 6/12

(54) **Structure à guide de lumière et miroir intégrés et procédé de réalisation d'une telle structure**
Struktur mit integrierten Lichtwellenleiter und Spiegel und Verfahren zur Herstellung einer solchen Struktur
Integrated light guide and mirror structure and method of making such a structure

(30) Priorité: 21.07.1992 FR 9208988
(43) Date de publication de la demande: 26.01.1994
(73) Titulaire: FRANCE TELECOM, 75015 Paris (FR)
(72) Inventeur: Menigaux, Louis, F-91440 Bures Sur Yvette (FR); Carenco, Alain, F-92340 Bourg La Reine (FR)
(74) Mandataire: Schrimpf, Robert

(56) Documents cités:
- EP-A- 0 464 869
- JOURNAL OF APPLIED PHYSICS, vol. 68, no. 5, 1 septembre 1990, New York US, pp. 2450-2453, XP212331; D. REMIENS et al.: 'GaInAsP/InP integrated ridge laser with a butt-jointed transparent optical waveguide fabricated by single-step metalorganic vapor-phase epitaxy'
- PATENT ABSTRACTS OF JAPAN, vol. 10, no. 188 (P-473) 3 juillet 1986; & JP-A-61 32 804

## Description

La présente invention concerne les structures monolithiques à guide de lumière et miroir intégrés.

L'expression "structure monolithique" désigne une structure qui fait appel à une technologie commune de réalisation des divers éléments et non à une technique d'assemblage de divers composants réalisés séparément.

L'expression "guide de lumière" recouvre dans le texte de la présente invention, aussi bien les structures propres à guider la lumière de façon passive que les structures propres à guider la lumière avec amplification de l'onde lumineuse.

La présente invention trouve en particulier application dans le domaine des télécommunications optiques.

Une structure à guide de lumière et miroir intégrés est décrite dans le document FR-A-2 655 775. Plus particulièrement, ce document propose de réaliser une structure guide-photodétecteur, en épitaxiant sur un substrat plan diverses couches de matériaux nécessaires à la réalisation d'un guide de lumière et d'un photodétecteur. Un miroir est ensuite formé par attaque chimique ou autre des différentes couches épitaxiées, ce miroir étant apte à renvoyer la lumière depuis le guide vers le photodétecteur.

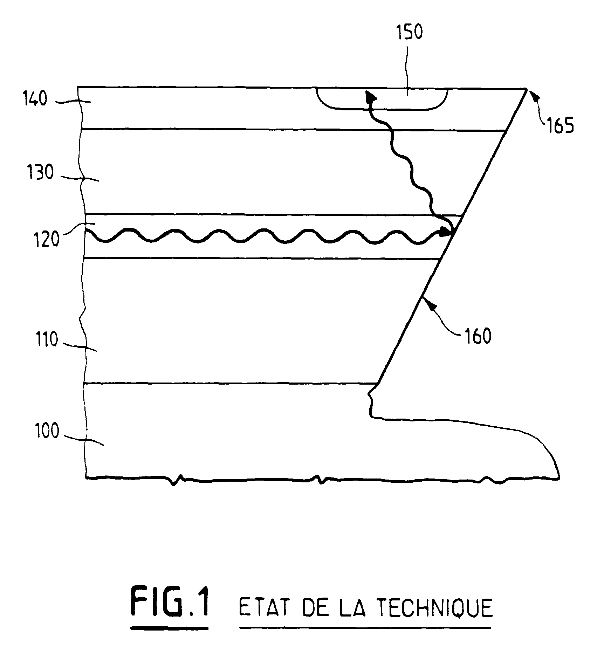

On a représenté sur la figure 1 une structure guide-photodétecteur réalisée par un procédé conforme à l'art antérieur, tel que décrit dans le document FR-A-2 655 775. On aperçoit sur cette figure un substrat 100, sur lequel on a déposé par épitaxie, successivement, une couche de confinement inférieure 110, une couche formant guide 120, une couche de confinement supérieure 130, et une couche photodétectrice 140, comprenant une jonction de photodiode 150. Le plan incliné formant miroir 160 est réalisé par attaque chimique des différentes couches épitaxiées 110, 120, 130 et 140 et renvoie la lumière depuis la couche formant guide de lumière 120 vers la jonction de photodiode 150.

Bien que la structure à guide de lumière et miroir intégrés proposée dans le document FR-A-2 655 775 soit obtenue par un procédé qui constitue une amélioration notable des procédés antérieurement proposés, en ne comportant notamment qu'une seule étape d'épitaxie, elle présente toutefois l'inconvénient d'être coûteuse et délicate à fabriquer car le plan incliné formant miroir 160 est réalisé à l'aide d'une succession d'attaques chimiques sélectives, donc différentes, des couches épitaxiées 110, 120, 130 et 140.

Par ailleurs, la structure à guide de lumière et miroir intégrés obtenue par ce procédé se révèle être particulièrement fragile au niveau de l'arête saillante 165 du miroir 160.

La présente invention a pour objet une structure à guide de lumière et miroir intégrés, telle que définie à la revendication 1.

La présente invention a également pour objet un procédé de réalisation d'une telle structure, tel que défini à la revendication 6.

Dans le procédé selon l'invention, les diverses couches de matériaux aptes à former le guide de lumière comprennent, de préférence:
. une couche de confinement inférieure,
. une couche de guidage propre à guider la lumière, d'indice plus élevé que la couche de confinement inférieure,
. une couche de confinement supérieure, d'indice moindre que la couche de guidage.

Lorsque le substrat est décapé par voie chimique, le procédé conforme à l'invention comprend, en outre, l'étape consistant à :
. déposer sur le substrat, par épitaxie, une couche d'arrêt, avant dépôt des diverses couches de matériaux aptes à former un guide de lumière.

Dans une réalisation, le substrat est en phosphure d'indium InP, la couche de confinement inférieure en InP, la couche de guidage en matériau quaternaire GalnAsP, la couche de confinement supérieure en InP, et la couche d'arrêt est de même composition que la couche de guidage.

Dans le cas où le procédé est appliqué plus particulièrement à la réalisation d'une structure guide-photodétecteur, le procédé se caractérise en ce qu'il comprend en outre l'étape consistant à :
. déposer sur le substrat, par épitaxie, une couche photodétectrice, le miroir étant alors adapté à renvoyer la lumière depuis le guide de lumière vers la couche photodétectrice.

Dans le cas où le procédé est appliqué plus particulièrement à la réalisation d'une structure de diode superluminescente, le procédé comprend en outre l'étape consistant à:
. déposer sur le substrat, par épitaxie, au moins une couche formant zone active, propre à amplifier la lumière.

Plus particulièrement, dans le cas où la structure selon l'invention est une structure guide-photodétecteur, celle-ci comprend avantageusement :
. un substrat présentant deux régions espacées entre elles et de hauteurs différentes,
. une pluralité de couches déposées par épitaxie sur le substrat, propres à former un guide de lumière sur au moins l'une desdites régions ainsi qu'une couche photodétectrice, l'une au moins desdites couches s'étendant entre lesdites régions, selon un plan incliné, pour former un miroir apte à renvoyer la lumière depuis le guide de lumière vers la couche photodétectrice.

Avantageusement, la pluralité de couches comprend, successivement déposées par épitaxie sur le substrat :
. une couche de confinement inférieure,
. une couche de guidage propre à guider la lumière, d'indice plus élevé que la couche de confinement inférieure,
. une couche de confinement supérieure, d'indice moindre que la couche de guidage,
. une couche photodétectrice, et de préférence, puisque le substrat est attaqué sur l'arrière par voie chimique, la pluralité de couches comprend, successivement déposées par épitaxie sur le substrat :
   . une couche d'arrêt,
   . une couche de confinement inférieure,
   . une couche de guidage propre à guider la lumière, d'indice plus élevé que la couche de confinement inférieure,
   . une couche de confinement supérieure, d'indice moindre que la couche de guidage,
   . une couche photodétectrice.

Plus particulièrement, dans le cas d'une structure de diode superluminescente, la pluralité de couches déposées par épitaxie sur le substrat, forme une zone active de diode superluminescente.

D'autres caractéristiques et avantages de l'invention apparaîtront à la lecture de la description détaillée qui va suivre, d'exemples de réalisation non limitatifs de l'invention, et à l'examen du dessin annexé sur lequel :
- la figure 1 est une vue en coupe d'une structure à guide de lumière et miroir intégrés précédemment décrite, servant à illustrer l'état de la technique,
- les figures 2 à 5 illustrent, de façon schématique, les différentes étapes d'un procédé selon l'invention,
- la figure 6 est une vue en coupe d'une structure de diode super-luminescente obtenue par la mise en oeuvre du procédé selon l'invention.

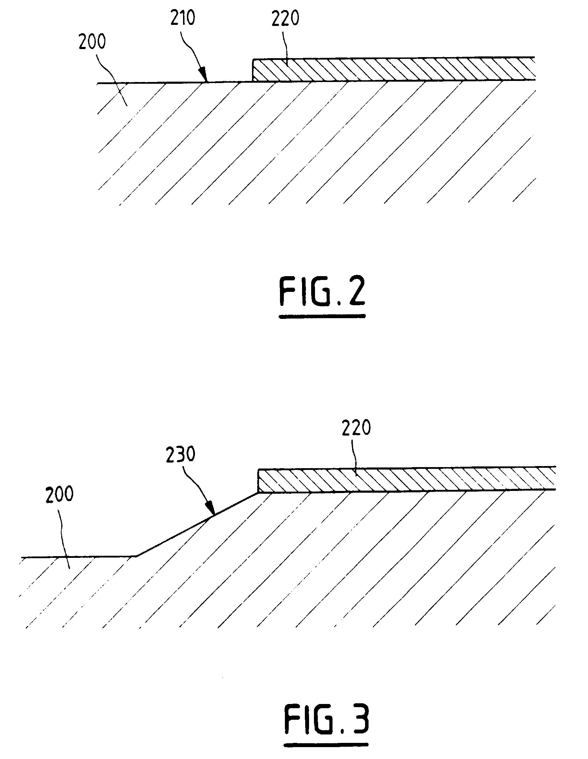

On a représenté sur les figures 2 à 5 différentes étapes d'un procédé de réalisation d'une structure à guide de lumière et miroir intégrés conforme à l'invention.

Conformément à l'invention, on commence par graver un substrat 200 pour former un plan incliné sur celui-ci. Le substrat 200 peut être gravé par voie chimique ou par usinage ionique à l'aide de faisceaux d'ions réactifs ou non, selon des méthodes connues en elles-mêmes. De préférence, le plan incliné est gravé par voie chimique. Dans un exemple de réalisation non limitatif de l'invention, le substrat 200 est en phosphure d'indium InP.

On commence par réaliser sur le substrat 200 en InP, par photolithographie, un masque 220, puis le substrat 200 recouvert du masque 220 est gravé à l'aide d'une solution acide HCl (1 volume) + H₃PO₄ (1 volume) à température ambiante, selon des techniques de photolithographie connues en elles-mêmes.

Dans l'exemple de la figure 2, la surface initiale 210 du substrat 200 est plane et s'étend dans un plan <100>. Dans la suite de la description, l'expression "hauteur" se réfèrera à une direction perpendiculaire au plan de la surface plane 210. La gravure chimique s'effectue de façon privilégiée selon un plan cristallin <211> du substrat 200, qui est désigné par la référence 230 sur la figure 3. Le substrat 200 est ensuite préparé pour être recouvert par épitaxie d'un ensemble de couches propres à former un guide de lumière.

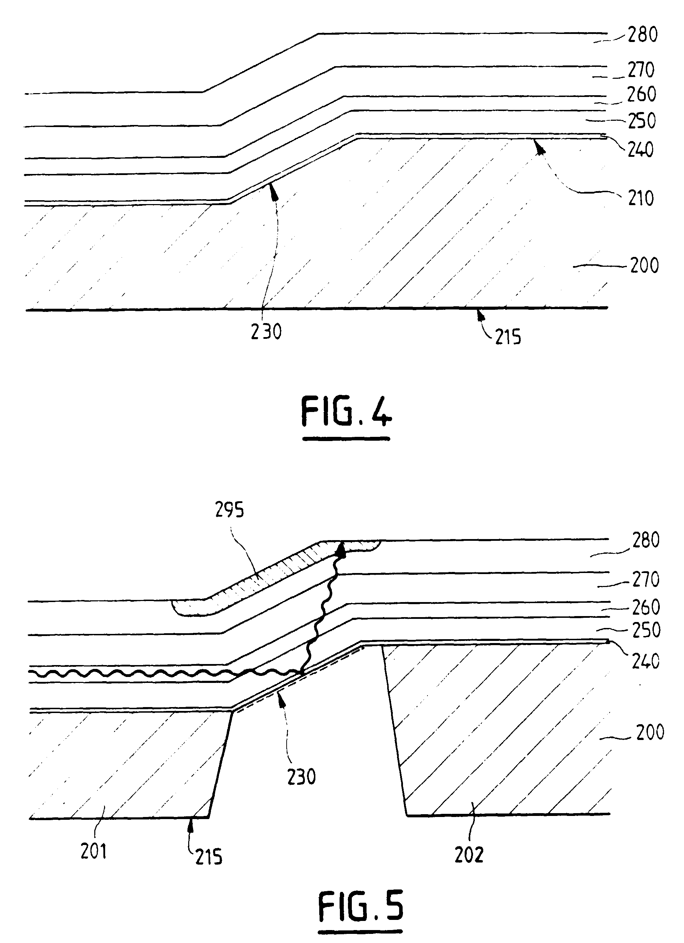

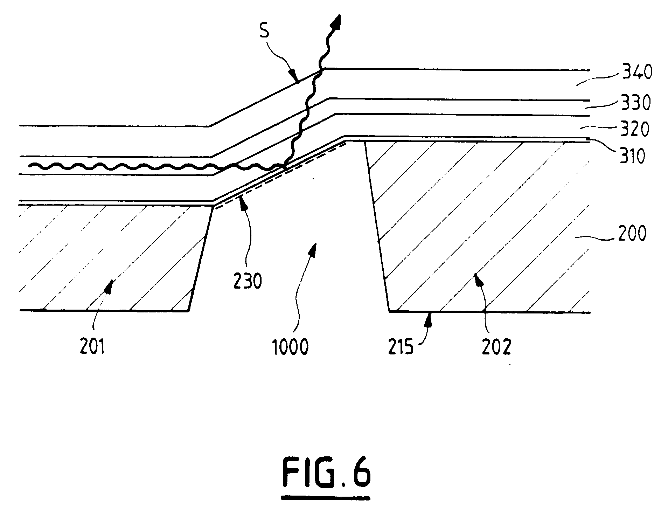

Les figures 4 et 5 dont la description va suivre se réfèrent plus particulièrement à l'application du procédé conforme à l'invention à la réalisation d'une structure guide-photodétecteur.

Sur la figure 4, on aperçoit une couche d'arrêt 240, une couche de confinement inférieure 250, une couche formant guide de lumière 260, une couche de confinement supérieure 270 et une couche photodétectrice 280, déposées successivement par épitaxie sur le substrat 200. On notera que les couches de confinement supérieure et inférieure sont réalisées en des matériaux d'indice plus faible que la couche de guidage 260 de façon à former un guide de lumière.

Avantageusement, la couche d'arrêt est en matériau quaternaire InGaAsP, de préférence ayant la composition In_{0,72} Ga_{0,28} As_{0,61} P_{0,39} et d'épaisseur 500 Å. Les couches de confinement inférieure 250 et supérieure 270 sont réalisées en phosphure d'indium InP d'épaisseur voisine de 1 µm. La couche de guidage 260 est réalisée en matériau quaternaire de même composition que la couche d'arrêt et d'épaisseur voisine de 0,65 µm. La couche photodétectrice 280 d'épaisseur voisine de 2 µm est réalisée en matériau ternaire GaInAs, de préférence ayant la composition Ga_{0,47} In_{0,53} As.

Conformément à l'invention, le substrat 200 est ensuite localement décapé sur l'arrière, c'est-à-dire par la face 215 du substrat 200 opposée à la face 210, jusqu'au plan incliné 230, pour former un miroir apte à renvoyer la lumière depuis la couche de guidage 260 dans une direction donnée, c'est-à-dire, dans l'exemple de réalisation de la figure 5, vers la couche photodétectrice 280.

De préférence, comme cela vient d'être décrit, on a déposé sur le substrat 200 lors de l'épitaxie une couche d'arrêt 240, et on réalise le décapage de l'arrière du substrat 200 par voie chimique, en réalisant tout d'abord, par photolithographie, un masque présentant une ouverture au niveau du plan incliné 230. La couche d'arrêt 240 est choisie de telle sorte qu'elle protège les différentes couches 250, 260, 270, 280 déposées par épitaxie lors de l'attaque chimique pour former le miroir.

Le substrat 200 est attaqué localement avec une solution acide HCl (1 volume) + H₃PO₄ (1 volume), étant bien entendu que ceci n'est qu'un exemple et que ces proportions peuvent varier. Cette solution acide a la propriété, entre autres, d'attaquer InP avec une vitesse de l'ordre de 1,5 µm/mn à température ambiante tandis que le matériau quaternaire GalnAsP n'est attaqué qu'à une vitesse inférieure à 0,01 µm/mn. L'homme de l'art comprend ainsi aisément que la couche d'arrêt ralentit considérablement la progression de l'attaque chimique effectuée localement sur l'arrière du substrat lorsque celle-ci atteint le niveau du plan incliné 230, et protège ainsi l'ensemble des couches 250, 260, 270, 280 déposées par épitaxie.

Le miroir intégré ainsi formé présente une face réfléchissante qui coïncide avec le plan incliné 230, propre à renvoyer la lumière depuis la couche de guidage 260 dans une direction donnée, plus particulièrement, dans le cas de la structure guide-photodétecteur représentée sur la figure 5, vers une jonction de photodiode 295 formée sur la couche détectrice 280. Cette jonction de photodiode 295 est réalisée par dépôt d'une couche de masquage, par exemple en nitrure de silicium SiNₓ, sur la dernière couche 280 déposée par épitaxie, pour ensuite réaliser la jonction de photodiode 295 par diffusion de type P au travers d'une ouverture pratiquée dans cette couche de masquage, par exemple une diffusion de zinc.

On peut proposer, sans sortir du cadre de l'invention, de réaliser le décapage de l'arrière du substrat par usinage ionique de préférence réactif (attaque sélective), à l'aide d'un faisceau d'ions.

On peut également proposer, sans sortir du cadre de l'invention, de choisir d'autres matériaux (GaAs, GaAlAs, etc...), de changer la composition du substrat et des différentes couches déposées par épitaxie, ainsi que leur épaisseur, pour les adapter aux paramètres de longueur d'onde de la lumière dans le guide par exemple, ou pour former dans le guide de lumière ou en son voisinage une zone active susceptible d'amplifier l'onde lumineuse, voire former une structure laser (par exemple du type à rétroaction répartie (DFB)).

Ainsi, on a représenté sur la figure 6 une structure de diode superluminescente obtenue par la mise en oeuvre du procédé selon l'invention.

On aperçoit sur cette figure un substrat 200 comportant deux régions disjointes espacées 201 et 202, de hauteurs différentes mesurées en prenant pour origine le plan de la face 215 du substrat 200, et une pluralité de couches 310, 320, 330, 340 déposées par épitaxie sur les deux régions disjointes 201 et 202 du substrat, s'étendant entre celles-ci selon un plan incliné 230 pour former un miroir apte à renvoyer la lumière depuis la couche 330, qui constitue la zone active, vers la surface S de la structure.

Dans l'exemple de réalisation décrit, le substrat 200 est en phosphure d'indium InP, la couche 310 est une couche d'arrêt en matériau quaternaire, la couche 320 est une couche de confinement inférieure en InP, la couche formant zone active 330 est en matériau quaternaire, et la couche 340 de confinement supérieure en InP.

Dans le mode de réalisation présenté sur la figure 6, l'espace intérieur 1000 aux deux régions disjointes espacées 201, 202 est au contact avec l'air, mais on peut proposer de remplir éventuellement cet espace par un matériau de remplissage de faible indice, en veillant naturellement à ce que la différence d'indice entre la première couche déposée par épitaxie et s'étendant entre lesdites régions disjointes espacées et le matériau de remplissage soit telle qu'il y ait réflexion sur le plan 230.

On peut également proposer de déposer une métallisation représentée en pointillés sur les figures 5 et 6 sur l'arrière du miroir, de façon à améliorer les qualités de réflexion de ce dernier.

Finalement, le procédé objet de la présente invention s'avère être particulièrement avantageux, en ne nécessitant qu'une seule étape d'épitaxie et en permettant de réaliser le miroir par des techniques simples, par exemple des techniques de photolithographie, avec un positionnement précis du miroir par rapport au guide.

Les structures à guide de lumière et miroir intégrés obtenues par ce procédé, qu'il s'agisse de structures guide-photodétecteur, de structures de diodes superluminescentes ou de structures laser sont de coût réduit et s'avèrent particulièrement robustes.

## Revendications

1. Structure à guide de lumière et miroir intégrés, caractérisée en ce qu'elle comprend :
deux éléments de substrat disjoints (201, 202) d'épaisseurs différentes, espacés l'un de l'autre par un milieu (1000) de faible indice de réfraction et disposés l'un par rapport à l'autre de façon à avoir deux faces principales (215) coplanaires,
une pluralité de couches (240, 250, 260, 270, 280 ; 310, 320, 330, 340) déposées par épitaxie sur les deux autres faces principales (210) non coplanaires des deux éléments de substrat disjoints, propres à former un guide de lumière sur au moins l'élément de substrat (201) ayant l'épaisseur la plus faible, l'une au moins des couches (240 ; 310) s'étendant entre les faces principales non coplanaires des deux éléments disjoints espacés (201, 202) pour former, avec le milieu (1000) de faible indice de réfraction situé entre ces deux éléments, une interface plane inclinée (230) capable de constituer un miroir apte à renvoyer la lumière depuis le guide de lumière dans une direction donnée s'éloignant des éléments de substrat.

2. Structure selon la revendication 1, caractérisée en ce que ladite pluralité de couches comprend, successivement déposées par épitaxie sur le substrat (200) :
. une couche de confinement inférieure (250),
. une couche de guidage (260) propre à guider la lumière, d'indice plus élevé que la couche de confinement inférieure,
. une couche de confinement supérieure (270), d'indice moindre que la couche de guidage,
. une couche photodétectrice (280).

3. Structure selon la revendication 1, caractérisée en ce que ladite pluralité de couches comprend, successivement déposées par épitaxie sur le substrat :
. une couche d'arrêt (240),
. une couche de confinement inférieure (250),
. une couche de guidage (260) propre à guider la lumière, d'indice plus élevé que la couche de confinement inférieure,
. une couche de confinement supérieure (270), d'indice moindre que la couche de guidage,
. une couche photodétectrice (280).

4. Structure selon la revendication 3, caractérisée en ce que le substrat (200) est en InP, la couche d'arrêt (240) en GaInAsP, la couche de confinement inférieure (250) en InP, la couche de guidage (260) en GaInAsP, la couche de confinement supérieure (270) en InP, la couche photodétectrice (280) en GalnAs.

5. Structure selon la revendication 1, caractérisée en ce que ladite pluralité de couches déposées par épitaxie forme en outre une zone active de diode superluminescente.

6. Procédé de réalisation d'une structure à guide de lumière et miroir intégrés selon la revendication 1, caractérisé en ce qu'il comprend les étapes consistant à:
graver l'une des faces principales (210) d'un substrat (200) pour former sur une région du substrat un plan incliné (230) bordé de part et d'autre par deux autres régions (201, 202) de substrat d'épaisseurs différentes,
déposer sur ladite face (210) du substrat portant le plan incliné, par épitaxie, lesdites diverses couches (240, 250, 260, 270, 280 ; 310, 320, 330, 340) de matériaux aptes à former un guide de lumière, et
décaper la région de substrat située sous le plan incliné (230), par son autre face principale (215) opposée aux couches épitaxiées, jusqu'à accéder auxdites couches épitaxiées, pour former ainsi ledit miroir incliné apte à renvoyer la lumière depuis le guide dans ladite direction donnée s'éloignant du substrat.

7. Procédé selon la revendication 6, caractérisé en ce que l'on dépose en outre sur la face principale (210) du substrat (200) portant le plan incliné (230), par épitaxie, une couche d'arrêt (240) avant dépôt des diverses couches de matériaux aptes à former un guide de lumière.

8. Procédé selon la revendication 6 ou 7, caractérisé en ce qu'il comprend en outre l'étape consistant à déposer sur les diverses couches aptes à former le guide de lumière, par épitaxie, une couche photodétectrice (280), le miroir étant alors adapté à renvoyer la lumière depuis le guide de lumière vers la couche photodétectrice (280).

9. Procédé selon l'une des revendications 6 à 8, caractérisé en ce que les diverses couches de matériaux aptes à former un guide de lumière comprennent :
. une couche de confinement inférieure (250),
. une couche de guidage (260) propre à guider la lumière, d'indice plus élevé que la couche de confinement inférieure,
. une couche de confinement supérieure (270), d'indice moindre que la couche de guidage.

10. Procédé selon la revendication 9, caractérisé en ce que le substrat (200) est en phosphure d'indium InP, la couche de confinement inférieure (250) en InP, la couche de guidage (260) en matériau quaternaire GaInAsP, la couche de confinement supérieure (270) en InP, la couche photodétectrice (280) en GaInAs.

11. Procédé selon la revendication 10, caractérisé en ce que la couche d'arrêt (240) est de même composition que la couche de guidage (260).

12. Procédé selon l'une des revendications 6 à 9, caractérisé en ce que l'étape de dépôt des diverses couches aptes à former le guide de lumière consiste à:
. déposer sur le substrat, par épitaxie, au moins une couche (330) formant zone active, propre à amplifier la lumière.

## Patentansprüche

1. Struktur mit integriertem Lichtwellenleiter und Spiegel,
**gekennzeichnet** durch
zwei getrennte Substratelemente (201, 202) mit unterschiedlichen Dicken, welche durch eine Umgebung (1000) mit geringem Brechungsindex voneinander getrennt sind und im Verhältnis zueinander so angeordnet sind, daß sie zwei koplanare Hauptflächen (215) aufweisen,
mehrere Schichten (240, 250, 260, 270; 310, 320, 330, 340), welche mittels Epitaxie auf die zwei anderen, nicht koplanaren Hauptflächen (210) der beiden getrennten Substratelemente aufgebracht sind und einen Lichtwellenleiter auf wenigstens dem Substratelement (201) mit der geringeren Dichte bilden können, wobei wenigstens eine der Schichten (240; 310) sich zwischen den nicht koplanaren Hauptflächen der beiden getrennten Elemente (210, 220) erstreckt, um zusammen mit der Umgebung (1000) mit dem geringen Brechungsindex, welche zwischen diesen beiden Elementen liegt, eine geneigte ebene Grenzfläche (230) zu bilden, welche einen Spiegel bilden kann, der das Licht von dem Lichtwellenleiter in einer Richtung zurückschikken kann, welche sich aus der Verlängerung der Substratelemente ergibt.

2. Struktur nach Anspruch 1, dadurch **gekennzeichnet**, daß die mehreren Schichten - nacheinander mittels Epitaxie auf das Substrat (200) aufgebracht - die folgenden Schichten umfassen:
- eine untere Begrenzungsschicht (250),
- eine Führungsschicht (260), welche das Licht leiten kann, mit einem höheren Index als die untere Begrenzungsschicht,
- eine obere Begrenzungsschicht (270) mit einem geringerem Index als die Führungsschicht,
- eine Photodetektorschicht (280).

3. Struktur nach Anspruch 1, dadurch **gekennzeichnet**, daß die mehreren Schichten - nacheinander mittels Epitaxie auf das Substrat aufgebracht - die folgenden Schichten umfassen:
- eine Sperrschicht (240),
- eine untere Begrenzungsschicht (250),
- eine Führungsschicht (260), welche das Licht leiten kann, mit einem höheren Index als die untere Begrenzungsschicht,
- eine obere Begrenzungsschicht (270) mit einem geringeren Index als die Führungsschicht,
- eine Photodetektorschicht (280).

4. Struktur nach Anspruch 3, dadurch **gekennzeichnet**, daß das Substrat (200) aus InP ist, die Sperrschicht (240) aus GaInAsP ist, die untere Begrenzungsschicht (250) aus InP, die Führungsschicht (260) aus GaInAsP ist, die obere Begrenzungsschicht (270) aus InP ist, die Photodetektorschicht (280) aus GaInAs ist.

5. Struktur nach Anspruch 1, dadurch **gekennzeichnet**, daß die mehreren, mittels Epitaxie aufgebrachten Schichten ferner eine aktive Superlumineszenzdiodenzone bilden.

6. Verfahren zum Herstellen einer Struktur mit integriertem Lichtwellenleiter und Spiegel nach Anspruch 1,
**gekennzeichnet** durch die folgenden Verfahrensschritte:
Gravieren einer der Hauptflächen (210) eines Substrats (200) zum Ausbilden einer geneigten Ebene (230) auf einem Bereich des Substrats, welche zu beiden Seiten von zwei weiteren Bereichen (201, 202) des Substrats mit unterschiedlichen Dicken eingerahmt ist,
Aufbringen der verschiedenen Schichten (240, 250 260 270, 280; 310, 320, 330, 340) aus Materialien, welche zum Bilden eines Lichtwellenleiters geeignet sind, auf die Seite (210) des Substrats, welche die geneigte Ebene trägt, und Abtragen des Substratbereiches, welcher unter der geneigten Ebene (230) liegt, wobei die andere Hauptfläche (210) den Epitaxieschichten gegenüberliegt, bis man Zugriff auf diese Epitaxieschichten hat, um so den geneigten Spiegel auszubilden, welcher das Licht von dem Leiter in der Richtung zurückschicken kann, welche sich durch Verlängerung des Substrats ergibt.

7. Verfahren nach Anspruch 6, dadurch **gekennzeichnet**, daß ferner auf die Hauptfläche (210) des Substrats (200), welches die geneigte Ebene (230) trägt, mittels Epitaxie eine Sperrschicht (240) aufgebracht wird, bevor die verschiedenen Schichten aus Materialien, welche einen Lichtwellenleiter bilden können, aufgebracht werden.

8. Verfahren nach Anspruch 6 oder 7, **gekennzeichnet** durch den weiteren Schritt, welcher darin besteht, auf die verschiedenen Schichten, welche zum Ausbilden des Lichtwellenleiters geeignet sind, mittels Epitaxie eine Photodetektorschicht (280) aufzubringen, wobei der Spiegel dann das Licht von dem Lichtwellenleiter in Richtung zu der Photodetektorschicht (280) zurückschicken kann.

9. Verfahren nach einem der Ansprüche 6 bis 8, dadurch **gekennzeichnet**, daß die verschiedenen Schichten aus Materialien, welche zum Ausbilden eines Lichtwellenleiters geeignet sind, folgende Schichten umfassen:
- eine untere Begrenzungsschicht (250),
- eine Führungsschicht (280), welche das Licht leiten kann, mit einem höheren Index als die untere Begrenzungsschicht,
- eine obere Begrenzungsschicht (270) mit einem geringeren Index als die Führungsschicht.

10. Verfahren nach Anspruch 9, dadurch **gekennzeichnet**, daß das Substrat (200) aus Indiumphosphor InP, die untere Begrenzungsschicht (250) aus InP, die Führungsschicht (260) aus einem quaternären Material GaInAsP, die obere Begrenzungsschicht (270) aus InP, die Photodetektorschicht (280) aus GaInAs besteht.

11. Verfahren nach Anspruch 10, dadurch **gekennzeichnet**, daß die Sperrschicht (240) dieselbe Zusammensetzung hat wie die Führungsschicht (260).

12. Verfahren nach einem der Ansprüche 6 bis 9, dadurch **gekennzeichnet**, daß der Schritt, bei welchem die verschiedenen Schichten aufgebracht werden, welche den Lichtwellenleiter bilden können, darin besteht, auf das Substrat mittels Epitaxie wenigstens eine Schicht (330) aufzubringen, welche eine aktive Zone bildet, um das Licht zu verstärken.

## Claims

1. Structure with integrated optical waveguide and mirror, characterised in that it comprises:
. two disjointed substrate elements (201, 202) of different thicknesses, spaced from each other by a medium (1000) of low refractory index and arranged with respect to each other so as to have two coplanar main faces (215),
. a plurality of layers (240, 250, 260, 270, 280;310, 320, 330, 340) deposited by epitaxy on the two other noncoplanar main faces (210) of the two disjointed substrate elements, capable of forming an optical waveguide on at least the substrate element (201) of the least thickness, at least one of the layers (240;310) extending between the main noncoplanar faces of the two disjointed spaced elements (201, 202) to form, with the medium (1000) of low refrractory index located between these two elements, a flat inclined interface (230) capable of forming a mirror that is able to reflect light from the optical waveguide in a given direction allay from the substrate elements.

2. The structure according to Claim 1, characterised in that said plurality of layers are successively deposited on the substrate (200) by epitaxy and include:
. a lower confinement layer (250),
. a waveguide layer (260) capable of guiding light, of a higher index than that of the lower confinement layer,
. an upper confinement layer (270), of a lower index than that of the waveguide layer,
. a photodetective layer (280).

3. The structure according to Claim 1, characterised in that said plurality of layers are successively deposited on the substrate by epitaxy and include:
. a stop etch layer (240),
. a lower confinement layer (250),
. a waveguide layer (260) capable of guiding light, of a higher index than that of the lower confinement layer,
. an upper confinement layer (270), of a lower index than that of the waveguide layer,
. a photodetective layer (280).

4. The structure according to Claim 3, characterised in that the substrate (200) comprises InP, the stop etch layer (240) GaInAsP, the lower confinement layer (250) InP, the waveguide layer (260) GaInAsP, the upper confinement layer (270) InP and the photodetective layer (280) GaInAs.

5. The structure according to Claim 1, characterised in that said plurality of layers deposited by epitaxy also form an active superluminescent diode zone.

6. Process for producing a structure with integrated optical waveguide and mirror according to Claim 1, characterised in that it comprises the stages consisting in:
. etching one of the main faces (210) of a substrate (200) to form, on a region of said substrate, an inclined plane (230) bordered on either side by two other regions (201, 202) of substrate of different thicknesses,
. depositing, by epitaxy, on said face (210) of the substrate carrying the inclined plane, said various layers (240, 250, 260, 270, 280;310, 320, 330, 340) of materials capable of forming an optical waveguide, and
. clearing away the region of the substrate located under the inclined plane (230), via its other main face (215) furthest from the epitaxed layers, up to said epitaxed layers, to thus form said inclined mirror capable of reflecting light from the optical waveguide in said given direction away from the substrate.

7. The process according to Claim 6, characterised in that a stop etch layer (240) is also deposited on the main face (210) of the substrate (200) carrying the inclined plane (230) by epitaxy before depositing the various layers of materials capable of forming an optical waveguide.

8. The process according to Claim 1 or 2 characterised in that it additionally includes the stage consisting in depositing a photodetective layer (280) on the different layers capable of forming the optical waveguide, the mirror then being adapted for reflecting light from the optical waveguide towards the photodetective layer (280).

9. The process according to any one of Claims 1 to 3, characterised in that the various layers of material capable of forming an optical waveguide comprise:
. a lower confinement layer (250),
. a waveguide layer (260) capable of guiding light, of a higher index than that of the lower confinement layer,
. an upper confinement layer (270), of a lower index than that of the waveguide layer.

10. The process according to Claim 9, characterised in that the substrate (200) comprises indium phosphide, InP, the lower confinement layer (250) InP, the waveguide layer (260) quanternany material, GaInAsP, the upper confinement layer (270) InP, and the photodetective layer (280) GaInAs.

11. The process according to Claim 10, characterised in that the stop etch layer (240) is of the same composition as the waveguide layer (260).

12. The process according to any one of Claims 6 to 9, characterised in that the stage consisting in depositing various layers capable of forming the waveguide consists in depositing, on the substrate, by epitaxy, at least one layer (330) forming an active zone capable of amplifying light.
